# FASCICULE DE BREVET EUROPEEN

(11) **EP 1 820 410 B1**
(45) Date de publication et mention de la délivrance du brevet: **06.01.2010**
(21) Numéro de dépôt: 06124715.1
(22) Date de dépôt: 24.11.2006
(51) Int. Cl.: A23L 3/00, A23L 3/10, A23L 3/36, B01J 3/00, B01J 3/04, B65B 55/02

(54) **Procédé de traitement thermique de produits sous emballage comprenant du papier ou du carton et dispositif pour sa mise en oeuvre**
Verfahren zur thermischen Behandlung von Produkten in einer Verpackung enthaltend Papier oder Karton und Vorrichtung zur Durchführung dieses Verfahrens
Process of heat treatment of products in a package comprising paper or cardboard and device for carrying out said process

(30) Priorité: 18.01.2006 FR 0600435
(43) Date de publication de la demande: 22.08.2007
(73) Titulaire: Lagarde, 26780 Malataverne (FR)
(72) Inventeur: Leydier, Jean-Michel, 26740, La Coucourde (FR); Ranchon, Denis, 26780, Malataverne (FR)
(74) Mandataire: Domange, Maxime

(56) Documents cités:
- FR-A- 2 369 866
- FR-A- 2 587 591
- GB-A- 2 147 823
- US-A- 3 897 818
- PATENT ABSTRACTS OF JAPAN vol. 015, no. 377 (C-0870), 24 septembre 1991 (1991-09-24) & JP 03 151862 A (TOYO SEIKAN KAISHA LTD), 28 juin 1991 (1991-06-28)
- PATENT ABSTRACTS OF JAPAN vol. 016, no. 106 (C-0919), 16 mars 1992 (1992-03-16) & JP 03 280871 A (HISAKA WORKS LTD), 11 décembre 1991 (1991-12-11)

## Description

La présente invention concerne des procédé et dispositif de traitement thermique de produit(s) sous emballage(s), dans lequel on réalise une étape de chauffage suivie d'une étape de refroidissement.

Ce type de traitement thermique est plus particulièrement mis en oeuvre pour effectuer une stérilisation et/ou débactérisation desdits produits alimentaires sous emballages étanches impliquant de porter lesdits produits à une température à coeur d'environ au moins 90°C, pendant une certaine période de temps donné, plus particulièrement une température de 90 à 135°C avec un palier pendant 10 à 240 minutes, et plus particulièrement encore une température d'environ 105-110°C pendant 10 à 20 minutes.

Pour ce type de traitement thermique, on met classiquement en oeuvre un procédé dans lequel on introduit lesdits emballages ou récipients contenant les produits alimentaires à traiter dans un autoclave. Les emballages courants, comme la conserve métallique, les bocaux de verre, les emballages en matière plastique telle que propylène peuvent être traités en autoclave en utilisant différents process de chauffage impliquant une forte pulvérisation d'eau chaude en continu sur les emballages, ou une immersion totale des emballages dans une eau chaude, ou encore l'injection de vapeur chaude sur lesdits emballages. On peut plus particulièrement mettre en oeuvre un procédé tel que décrit dans FR 2201900.

En général, les étapes de refroidissement comprennent l'humidification de l'enceinte et des emballages par injection ou pulvérisation d'eau à l'intérieur de l'enceinte et sur les emballages de façon à obtenir un refroidissement rapide.

Dans le brevet US 3,897,818, on a décrit un procédé de traitement thermique de produits placés dans des emballages constitués de récipients en verre dans lequel on cherche à éviter un choc thermique qui pourrait endommager les récipients en verre lors de l'étape de refroidissement par pulvérisation d'eau, sans toutefois retarder excessivement le refroidissement. Pour ce faire, on réalise un pré-refroidissement par circulation d'eau à une température intermédiaire à l'intérieur de l'autoclave mais sans mise au contact de l'eau avec les récipients.

Dans US 3,897,818, on fait circuler l'eau de pré-refroidissement dans un serpentin situé à l'extérieur de la chambre formant canal de ventilation de la vapeur injectée ou à l'intérieur de laquelle sont placés lesdits emballages, de manière à abaisser la température des emballages progressivement sans choc thermique. En outre, dans US 3,897,818, l'eau de pré-refroidissement résulte du mélange des condensats que l'on récupère au fond de l'autoclave pour les recycler dans le circuit de pré-refroidissement en mélange avec l'eau de pré-refroidissement. Cette disposition contribue également à créer un abaissement de température progressif, de façon à éviter un choc thermique lors du refroidissement par mise en contact avec l'eau froide ultérieurement, et ce, sans retarder excessivement l'étape de refroidissement.

Les traitements de refroidissement par injection ou pulvérisation d'eau ne sont pas tolérés par certains emballages fragiles, tels que notamment les emballages de type carton que l'on trouve notamment pour les conditionnements du lait, de diverses soupes de légumes, purées, crèmes et liquides de produits alimentaires divers sous forme de briques ou autres emballages à section rectangulaire ou circulaire, surtout lorsque ceux-ci se trouvent à une température élevée..

Ces emballages sont constitués de complexes multi-couches de papier ou carton, lesdites couches étant collées entre elles par des adhésifs polymères.

Plus particulièrement, il a été découvert selon la présente invention, que le problème de ces emballages est que ceux-ci sont détériorés du fait de l'humidification excessive des emballages lorsque ceux-ci sont à une température élevée en fin de stérilisation, notamment pour des cartons du type mentionné ci-dessus, à une température supérieure à 80°C. En fin de chauffage à ce stade, les emballages sont au contact avec les condensats qui se forment dès l'interruption de l'étape de chauffage. En outre, à cette température, les propriétés adhésives des liants entrant dans la composition desdits complexes multi-couches de type carton sont irrémédiablement dégradées ou affectées, de sorte que l'humidité pénètre dans le matériau et le dégrade. En outre, même après séchage, les propriétés mécaniques de l'emballage ne sont pas restaurées, les adhésifs ayant été irrémédiablement dégradés par humidification à température élevée. Cette situation se produit dans la phase initiale du refroidissement ou dans les phases de pré refroidissement au cours desquelles de l'eau est injectée ou pulvérisée sous forme de gouttelettes sur les emballages à un moment où la température des parois de l'emballage est encore la plus élevée. Les études réalisées selon la présente invention ont démontré que ce n'est que durant cette phase de refroidissement ou en phase initiale de refroidissement et donc juste avant le douchage complet des produits que les liants sont vulnérables, le refroidissement par pulvérisation sur les emballages n'ayant lui, plus aucun effet négatif lorsque le liant retrouve des caractéristiques de tenue mécanique suite à un abaissement de sa température s'il n'a pas été dégradé précédemment. En effet, lorsque le liant se trouve à une certaine température, si une humidification se produit à ce moment, il en résulte une pénétration telle que même après séchage le liant ne peut plus retrouver ses fonctions adhésives assurant les propriétés mécaniques de l'emballage.

Un but de la présente invention est donc de fournir un traitement thermique de produits alimentaires sous emballages et/ou récipients comprenant les étapes successives de chauffage et stérilisation par injection de vapeur, et refroidissement subséquent par pulvérisation ou injection d'eau, qui soient compatibles avec les emballages et/ou récipients semi-rigides de type papier ou carton.

Un autre but de la présente invention est aussi de fournir des procédé et dispositif de traitement thermique qui soient compatibles et facilement adaptables à moindre coût, avec et respectivement sur les installations de traitement thermique de ce type déjà en place, notamment avec les autoclaves existants, et qui de préférence, requièrent la mise en oeuvre de ce type de matériel standard.

Pour ce faire, la présente invention fournit un procédé de traitement thermique de produit(s) sous emballage(s) hermétique(s) notamment de produit(s) alimentaire(s) pour leur stérilisation ou débactérisation, dans lequel on réalise successivement : :
- une étape de chauffage par injection de vapeur dans l'autoclave et ventilation de la vapeur entre lesdits emballages placés à l'intérieur d'un canal de ventilation,
- une étape de pré-refroidissement sans mise en contact direct d'eau avec lesdits emballages, et
- une étape de refroidissement par injection ou pulvérisation d'eau directement en contact sur lesdits emballages,
caractérisé en ce que :
- on traite des produits dans des emballages comprenant du papier ou du carton, et
- à l'étape de pré-refroidissement, on réalise un abaissement de température de l'atmosphère ambiante à l'extérieur des emballages et un assèchement desdits emballages par circulation d'eau froide à l'intérieur de canalisations formant des radiateurs passant à proximité desdits emballages à l'intérieur dudit autoclave, lesdits radiateurs formant un dit canal de ventilation.

On comprend ainsi qu'il n'y a aucun écran entre les radiateurs et les emballages, ce qui facilité des refroidissement et assèchement rapides des emballages par condensation sur la surface relativement plus froide desdits radiateurs.

En outre, le fait que lesdits radiateurs forment ledit canal de ventilation et ne viennent pas encombrer l'intérieur du canal de ventilation contribue à ne pas perturber l'action de la ventilation, c'est-à-dire notamment l'homogénéisation de la température au sein de l'autoclave, afin d'obtenir un abaissement de température plus rapide pendant l'étape de pré-refroidissement en mettant en oeuvre une dite ventilation pendant l'étape de pré-refroidissement notamment.

On entend ici par « eau froide » une eau non chauffée.

On entend ici par « radiateur » tout dispositif creux dont la forme permet une circulation de ladite eau froide à l'intérieur et un échange thermique sans contact direct.

La solution selon la présente invention permet donc de conserver une étape de chauffage/stérilisation par injection de vapeur suivie d'une étape de refroidissement rapide par pulvérisation ou injection d'eau sur les emballages, en réalisant une étape de pré-refroidissement dans laquelle on réalise une déshumidification rapide des emballages de façon à éviter le maintien desdits emballages à l'état humide alors que la température est encore élevée.

Le procédé selon la présente invention permet d'assécher l'ambiance de l'autoclave et notamment des emballages s'y trouvant, par échange thermique indirect sans humidification de l'atmosphère ambiante. Plus précisément, lorsqu'on a réalisé une étape de chauffage par injection de vapeur, ce qui représente le mode de réalisation le plus approprié pour ce type d'emballage fragile car apportant le moins d'humidité, l'abaissement de température de l'atmosphère ambiante par l'action desdits radiateurs provoque une vaporisation de l'humidité en surface des emballages, dont les parois se retrouvent plus chaudes que l'atmosphère ambiante, et une condensation de cette vapeur sur les parois refroidies des radiateurs. Cet abaissement de température par échange thermique indirect permet donc un séchage sans humidité qui solidifie les couches des complexes multi-couches constitutifs des emballages. Une fois la température ainsi abaissée, les liants ayant retrouvé leurs caractéristiques mécaniques et d'adhésivité acceptables sans avoir été dégradés par humidification prolongée à température élevée, les emballages peuvent à nouveau supporter une humidification.

Compte tenu du fait qu'un refroidissement complet par échange thermique indirect selon l'invention pourrait être trop long, avantageusement, après ladite étape de pré refroidissement, on réalise une étape de refroidissement par injection ou pulvérisation d'eau directement en contact sur lesdits emballages.

Les canalisations formant radiateurs selon la présente invention, peuvent présenter diverses formes notamment tubulaires. Mais, toutefois de préférence, lesdites canalisations formant radiateurs se présentent sous forme de plaques rectangulaires reliées entre elles par des conduites tubulaires. Plus précisément, lesdites plaques formant radiateur se présentent sous forme de réservoirs plats constitués de deux tôles embouties et assemblées entre elles par soudure, de façon à composer un circuit de fluide, rigide et étanche, appelé aussi « radiaplaque ». Le nombre et la forme de ces radiateurs sont fonction du diamètre et de la longueur de l'autoclave.

Dans un mode de réalisation avantageux, lesdites plaques sont disposées autour desdits emballages et forment un canal de ventilation. Ceci facilite l'échange thermique entre les emballages et les radiateurs.

Ce mode de réalisation est particulièrement avantageux lorsque pendant ladite étape de pré refroidissement, on effectue une ventilation forcée d'air à l'intérieur dudit autoclave pour homogénéiser la température et ainsi accélérer le pré-refroidissement..

Dans ce cas, pour former le canal de ventilation, lesdites plaques sont disposées verticalement, latéralement aux dits emballages et dans la direction longitudinale de l'autoclave. Le montage desdits radiateurs verticalement sur les côtés des emballages vient en lieu et place des tôles latérales des canaux de ventilation traditionnels que l'on trouve dans les autoclaves.

Cette disposition permet d'injecter ou pulvériser l'eau de refroidissement depuis la partie supérieure de l'autoclave et de récupérer les eaux de condensats et l'eau pulvérisée lors de l'étape de refroidissement par ruissellement sur les emballages, au fond de l'autoclave.

La réalisation des radiateurs sous forme de plaques rectangulaires fournit une surface de parois froides importantes favorisant une vaporisation de l'humidité en surface des emballages, suivie de la condensation de ladite vapeur sur les parois refroidies desdits radiateurs.

On entend ici par « plaques rectangulaires » des plaques creuses s'inscrivant sensiblement dans un parallélépipède rectangle.

Plus particulièrement selon la présente invention, on traite des produits sous emballage dont les propriétés mécaniques sont affectées par l'humidité lorsque lesdits emballages sont portés à une température donnée, et on effectue ladite étape de pré refroidissement pour abaisser la température jusqu'à atteindre une température de l'emballage inférieure ou égale à ladite température donnée.

Plus particulièrement encore, le procédé selon l'invention est avantageux lorsque ledit emballage est constitué de complexe multi couches de papier et carton collées par des liants polymères et on effectue l'étape de pré refroidissement jusqu'à atteindre une température de l'atmosphère ambiante extérieure aux emballages de 80°C. La température de 80°C dans l'atmosphère ambiante autour desdits emballages permet de réduire la température des emballages eux-mêmes à environ 95°C, cette température de 95°C correspondant à la température limite acceptable au-delà de laquelle les propriétés des polymères constitutifs des colles, sont irrémédiablement affectées et ne permettent plus que lesdites colles maintiennent les propriétés mécaniques desdits emballages même après séchage, lorsque lesdits emballages sont soumis à un traitement humide ultérieur. Pour des emballages plus fins ou plus fragiles, cette température limite devrait être encore abaissée.

Avantageusement, on règle la température de pré refroidissement par réglage du débit d'alimentation en eau desdites canalisations formant radiateurs.

Plus particulièrement, on contrôle la température de pré-refroidissement par une vanne d'introduction d'eau dans lesdits radiateurs, vanne gérée de façon automatique par le contrôleur du procédé et dans les cas nécessaires, à l'aide d'un limiteur de débit.

Dans un mode préféré de réalisation du procédé de l'invention, on récupère l'eau s'écoulant en sortie desdites canalisations formant radiateurs , de préférence au fond dudit autoclave, et pour ladite étape de refroidissement, on fait recirculer l'eau ainsi récupérée, de préférence en l'envoyant dans la partie supérieure dudit autoclave, pour l'injecter ou la pulvériser par-dessus lesdits emballages.

On pourrait réaliser différents procédés de chauffage, notamment sans humidification des emballages pour des emballages fragiles, mais le procédé le plus approprié est le procédé par injection de vapeur bien que d'autres procédés à sec, tels que par radiation de micro ondes ou radiation de hautes fréquences soient envisageables,mais plus coûteux.

Dans un mode de réalisation de la présente invention, on réalise une dite étape de chauffage par injection de vapeur dans l'autoclave entre lesdits emballages, de préférence par ventilation, et à l'étape de pré refroidissement, on récupère le condensat de vapeur au fond de l'autoclave en mélange à l'eau s'écoulant en sortie desdites canalisations formant radiateur. Ce mélange permet d'obtenir le volume d'eau nécessaire au refroidissement ultérieur.

Dans ce mode de réalisation, de préférence, on fait recirculer l'eau provenant des condensats de la vapeur récupérée au fond de l'autoclave en mélange avec l'eau s'écoulant en sortie desdites canalisations formant radiateurs.

De préférence, pendant l'étape de pré-refroidissement, on maintient la pression dans l'autoclave, par injection d'air comprimé, au même niveau que celle atteinte à l'étape de chauffage.

On entend ici par « emballage » tout type de conditionnement et notamment des récipients rigides ou semi-rigides dans lesquels sont contenus et enfermés lesdits produits alimentaires ou des enveloppes d'une feuille, plaque ou film plié(e) et lié(e) autour dudit produit alimentaire.

La présente invention a également pour objet un dispositif de traitement thermique de produit(s) sous emballage(s) utile dans un procédé selon l'invention, comprenant :
- un dit autoclave apte au traitement thermique de produit sous emballage,
- un canal de ventilation à l'intérieur duquel peuvent être placés lesdits emballages, et
- des moyens d'injection de vapeur dans ledit autoclave,
- des moyens de ventilation dans ledit canal de ventilation, et
- des moyens de pulvérisation d'eau froide sur lesdits emballages,
caractérisé en ce que ledit autoclave comprend des moyens d'abaissement de la température à l'extérieur desdits emballages et assèchement desdits emballages par circulation d'eau froide à l'intérieur de canalisations formant des radiateurs à proximité de l'emplacement destiné à recevoir lesdits emballages, lesdits radiateurs formant un dit canal de ventilation.

Un dispositif de traitement thermique selon l'invention comprend également de préférence des moyens pour récupérer l'eau en fond dudit autoclave et la recycler jusque dans la partie supérieure dudit autoclave, et des moyens d'injection et/ou pulvérisation d'eau dans ladite partie supérieure de l'autoclave pour injecter et/ou pulvériser de l'eau par-dessus les emballages contenus dans ledit autoclave.

D'autres caractéristiques et avantages de la présente invention apparaîtront à la lumière de la description détaillée qui va suivre.

La figure 1 représente un autoclave permettant la mise en oeuvre d'un procédé de traitement thermique selon la technique antérieure.

Les figures 2 à 4 représentent des vues en coupes transversale (fig.2) et longitudinale (fig.3 et 4) d'un dispositif de traitement thermique selon la présente invention.

La figure 5 représente les variations de température (T) en °C et pression (P) en bars au cours d'un cycle de traitement thermique de stérilisation (t= heure : minute) sachant que ces variables sont fonction des produits autoclavés et du type de traitement thermique (stérilisation ou pasteurisation).

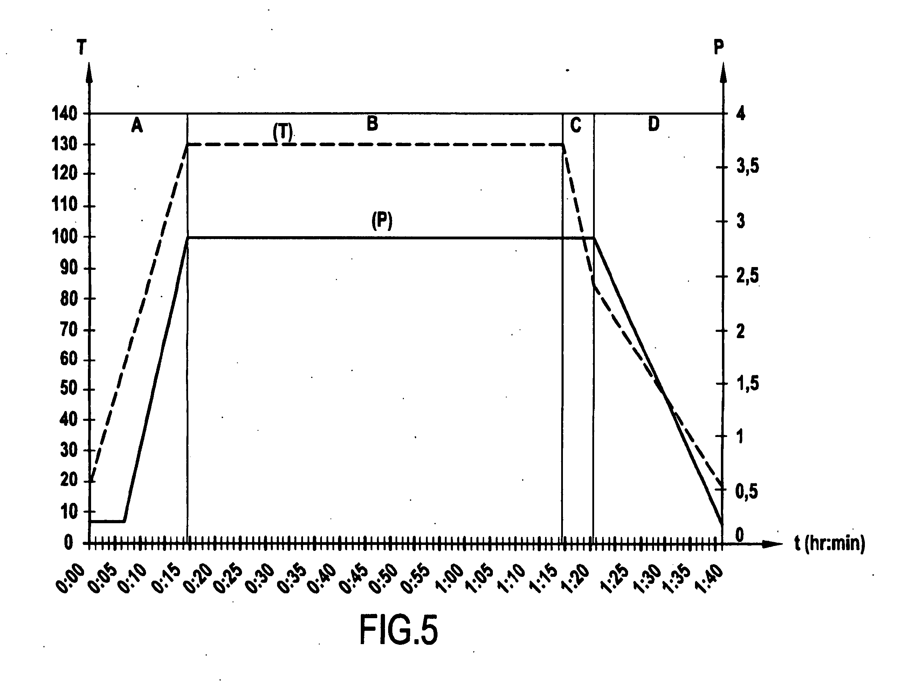

Sur la figure 5, A= étape du chauffage
B = étape de palier de stérilisation
C = étape de pré-refroidissement
D = étape de refroidissement

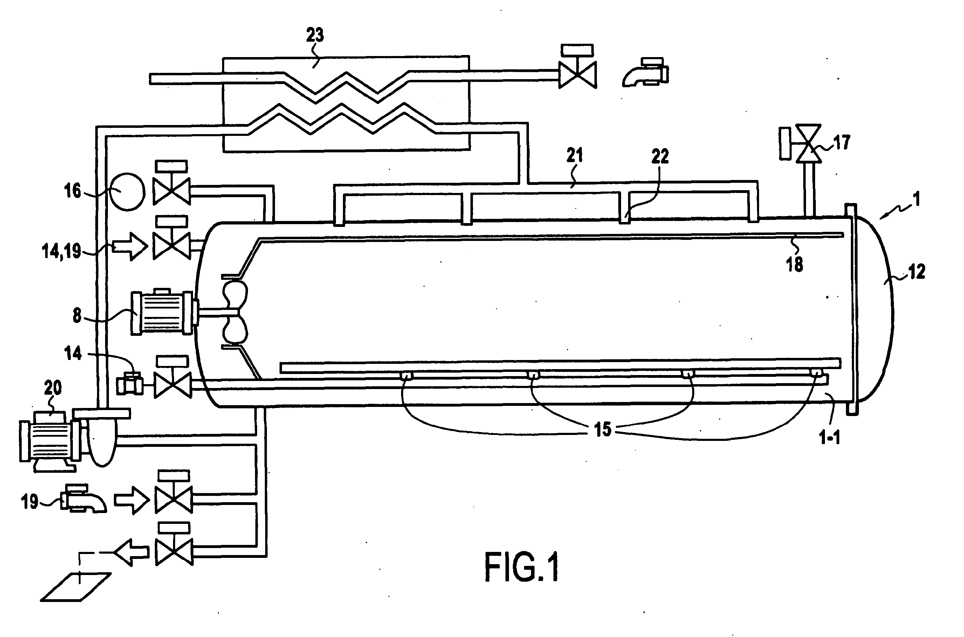

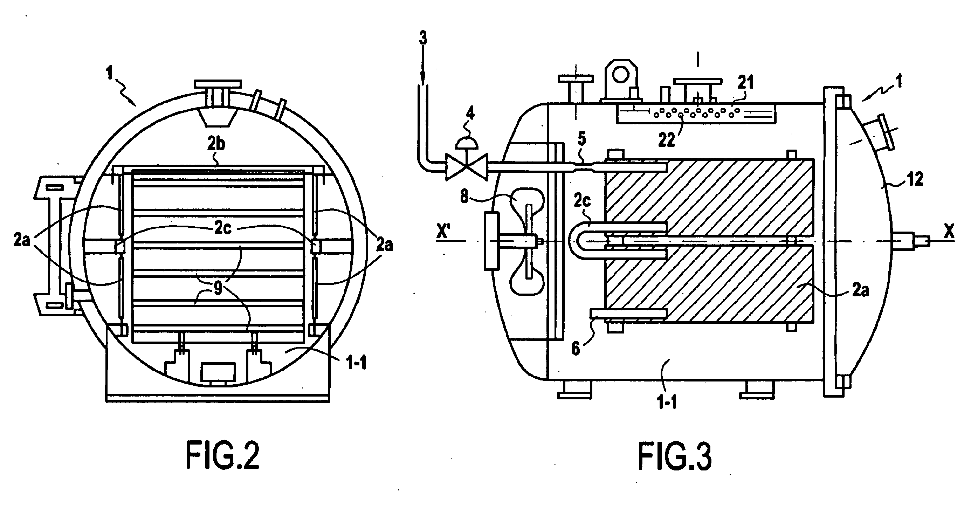

Sur la figure 1, on a représenté une installation de traitement thermique par technologie vapeur /air dans un autoclave 1 selon la technique antérieure. Les emballages sont disposés verticalement dans des paniers sur le fond desquels ils reposent ou sur des plateaux-tiroirs 9 à l'intérieur d'une ossature (figure 3) et ils sont introduits dans l'autoclave par l'extrémité 12. Dans une première phase de montée en température, on injecte de la vapeur 14 directement dans l'autoclave dans des tuyaux inférieurs et à travers des gicleurs 15 entre les emballages. Une turbine de ventilation 8 crée une circulation forcée de la vapeur permettant ainsi une parfaite homogénéité de la température en tous points de l'autoclave. On régule la pression par injection d'air comprimé en 16 ou évacuation d'air comprimé en 17, l'air comprimé est canalisé par des tôles latérales 18 formant un canal de ventilation constituant un circuit fermé.

Pour refroidir les produits, on réalise un apport d'eau 19 dans le fond 1-1 de l'autoclave et on établit une circulation à l'aide d'une pompe 20 pour alimenter des tuyaux supérieurs 21 munis de gicleurs 22 qui servent à pulvériser de l'eau sur les emballages, les gouttelettes d'eau au contact de la surface des emballages créant un refroidissement de ceux-ci et des produits alimentaires qu'ils contiennent. En circulation, cette eau de refroidissement peut être refroidie elle-même, soit par apport direct d'eau fraîche 19, soit par l'intermédiaire d'un échangeur de chaleur externe 23.

Sur les figures 2 et 3, on a représenté un autoclave 1 dont l'équipement intérieur a été adapté pour mettre en oeuvre un procédé de traitement thermique selon la présente invention. On a seulement représenté les éléments caractéristiques du procédé selon l'invention étant entendu que les différents autres équipements de chauffage par injection de vapeur et régulation de pression par injection et évacuation d'air comprimé de la technique antérieure (figure 1) sont inchangés ainsi que la turbine de ventilation et les circuits de circulation d'eau entre le fond de l'autoclave et sa partie supérieure en vue d'une étape de refroidissement par ruissellement d'eau sur les emballages, lesquels ne sont pas représentés sur les figures 2 et 3.

Les caractéristiques originales du dispositif selon l'invention comprennent donc un système de radiateurs 2a, 2b, 2c constitués de plaques rectangulaires 2a disposées verticalement latéralement de part et d'autre d'une zone centrale dans laquelle sont disposés les emballages, lesdites plaques s'étendant donc dans la direction longitudinale XX' de l'autoclave. Les plaques rectangulaires 2a sont reliées entre elles par une tuyauterie 2b et des éléments de raccordement flexibles en inox 2c. Ces différentes plaques 2a sont montées en série et sont donc alimentées par une arrivée d'eau 3 à travers une vanne pneumatique 4 qui assure une injection d'eau à travers lesdits radiateurs, des tuyaux 2b, 2c assurant la jonction et la circulation de l'eau entre les différentes plaques 2a.

Le débit de l'eau à l'entrée des radiateurs est calibré au moyen d'un restricteur ou limiteur 5. Et, en sortie libre 6 des radiateurs, on peut récupérer l'eau en fond 1-1 de l'autoclave 1.

La vanne pneumatique 4, disposée à l'extérieur de l'autoclave, est correctement dimensionnée en fonction de la taille des radiateurs internes. Et le contrôleur automatique du procédé prend en charge la gestion de la régulation de l'introduction d'eau dans les radiateurs en liaison avec une régulation de la température à l'intérieur de l'autoclave.

Le montage des plaques 2a des radiateurs, verticalement sur les côtés de part et d'autre des emballages, forme un canal de ventilation nécessaire à la circulation du mélange air/vapeur dans l'autoclave traditionnel lorsque la turbine 8 est mise en action. Ces plaques 2a viennent donc en lieu et place des tôles latérales du canal de ventilation mis en oeuvre dans les réalisations antérieures.

Les tuyaux de liaison 2b entre les plaques sont disposés dans la partie supérieure de l'autoclave mais ne font pas obstacle à la pulvérisation d'eau dans la phase ultérieure de refroidissement. Ces tuyauteries 2b permettent la liaison transversale entre les jeux de plaques de radiateur 2a, étant donné qu'il n'y a qu'une seule alimentation en eau 3, les liaisons verticales étant assurées par les flexibles 2c ou tout autre raccordement souple ou rigide.

Les caractéristiques originales du procédé de traitement thermique selon l'invention comprennent donc, après l'étape de chauffage par injection de vapeur, une phase de pré refroidissement. Dans la technique antérieure, une pulvérisation d'eau, de plus ventilée, assurait un contact direct de l'eau sur les emballages, provoquant irrémédiablement une détérioration des colles comprises dans les emballages du type complexe multi couches en carton, et de ce fait une pénétration accrue de l'humidité.

Selon la présente invention, après l'étape de chauffage, on fait circuler de l'eau froide dans lesdits radiateurs entourant lesdits emballages, ce qui provoque une condensation de la vapeur sur les radiateurs eux-mêmes, l'eau de condensat étant récupérée au fond de l'autoclave 1-1. Puis, sans apport d'eau additionnel mais simplement en récupérant l'eau qui s'est écoulée en sortie 6 des radiateurs et qui a été récupérée au fond de l'autoclave, on peut faire recirculer l'eau du condensat et l'eau écoulée des radiateurs pendant la phase de pré refroidissement en l'envoyant dans le système de gicleurs 22 pulvérisation dans la partie supérieure 21 de l'autoclave pour effectuer une injection ou pulvérisation d'eau directement sur les emballages, une fois que le pré refroidissement par l'échange thermique indirect à l'aide desdits radiateurs a permis de baisser la température, notamment dans l'air ambiant à moins de 80°C, ce qui correspond pour des emballages multi-couches en carton de type des briques de lait du commerce, à une température des parois de l'emballage de 95°C.

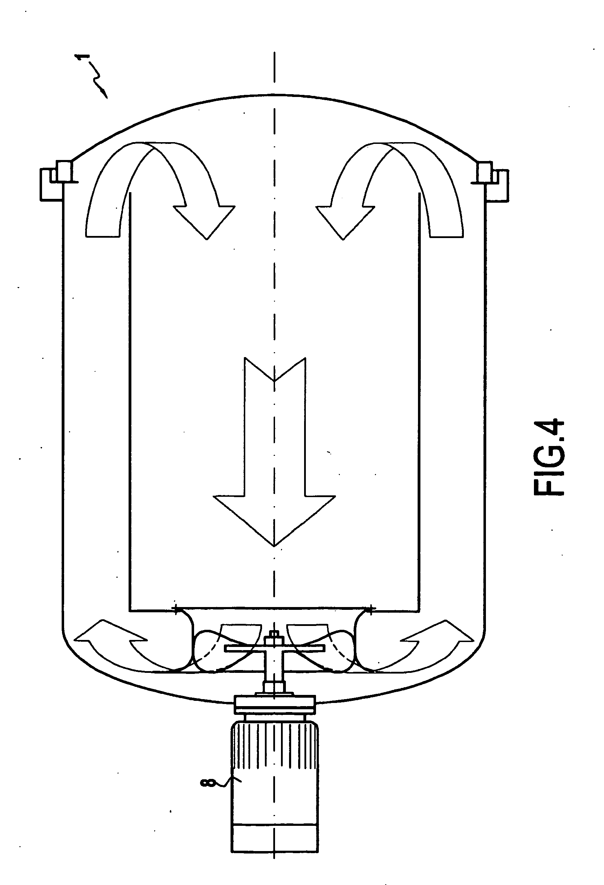

Pendant la phase de pré refroidissement, on peut effectuer une ventilation à l'aide de la turbine de ventilation 8, ce qui contribue à améliorer l'échange thermique indirect et l'abaissement de la température. Le canal de ventilation étant ouvert à ses extrémités longitudinales, on crée une circulation d'air à l'intérieur de l'autoclave dans l'espace entre les plaques et dans l'espace à l'extérieur des plaques, comme représenté sur la figure 4.

D'autre part, comme représenté sur le schéma de la figure 5, la pression est maintenue pendant la phase de pré refroidissement,au même niveau que pendant le palier de chauffage par injection d'air comprimé pour éviter l'établissement d'un gradient de pression dommageable entre l'intérieur des emballages et l'atmosphère ambiante à l'extérieur des emballages.

Le maintien de la pression n'est pas indispensable mais contribue au maintien en forme de l'emballage, du fait que la température à coeur du produit n'a pas encore baissé de façon significative et engendre donc une pression encore élevée dans l'emballage. Ce maintien de pression est fonction du type de produit autoclavé et ne constitue pas un critère constant de la présente invention.

Lorsque la température de 80°C est atteinte, on effectue un refroidissement par ruissellement d'eau et la chute de température s'effectue de manière beaucoup plus rapide : on passe de 80°C à la température ambiante d'environ 30°C en quelques minutes. Une fois la température abaissée à 80°C, le liant constitutif de l'emballage en carton multi couches avait retrouvé des caractéristiques mécaniques et d'adhésivité acceptables et les emballages ont toléré le ruissellement d'eau mis en oeuvre dans la phase de refroidissement ultérieur.

Ce montage peut venir compléter un équipement de pré refroidissement classique par pulvérisation de gouttelettes d'eau afin de laisser la faculté d'utiliser le pré refroidissement adéquat aux produits auto autoclavés dans le cadre d'une production multi emballages par exemple.

## Revendications

1. Procédé de traitement thermique de produit(s) sous emballage(s) hermétique(s) notamment de produit(s) alimentaire(s) pour leur stérilisation ou débactérisation, dans lequel on réalise successivement :
- une étape de chauffage par injection de vapeur dans l'autoclave et ventilation de la vapeur entre lesdits emballages placés à l'intérieur d'un canal de ventilation,
- une étape de pré-refroidissement sans mise en contact direct d'eau avec lesdits emballages, et
- une étape de refroidissement par injection ou pulvérisation d'eau directement en contact sur lesdits emballages,
**caractérisé en ce que** :
- on traite des produits dans des emballages comprenant du papier ou du carton, et
- à l'étape de pré-refroidissement, on réalise un abaissement de température de l'atmosphère ambiante à l'extérieur des emballages et un assèchement desdits emballages, par circulation d'eau froide à l'intérieur de canalisations formant des radiateurs (2a, 2b, 2c) passant à proximité desdits emballages à l'intérieur dudit autoclave (1), lesdits radiateurs formant un dit canal de ventilation.

2. Procédé selon la revendication 1, **caractérisé en ce que** lesdites canalisations formant radiateurs (2) se présentent sous forme de plaques rectangulaires (2a) reliées entre elles par des conduites tubulaires (2b), lesdites plaques rectangulaires (2a) comprenant des plaques disposées latéralement aux dits emballages et dans la direction longitudinale de l'autoclave.

3. Procédé selon la revendication 1 ou 2, **caractérisé en ce qu'**on traite des produits sous emballage dont les propriétés mécaniques sont affectées par l'humidité lorsque lesdits emballages sont portés à une température donnée, et on effectue ladite étape de pré refroidissement pour abaisser la température jusqu'à atteindre une température de l'emballage inférieure ou égale à ladite température donnée.

4. Procédé selon la revendication 3, **caractérisé en ce que** ledit emballage est constitué de complexe multi couches de papier et carton collées par des liants polymères.

5. Procédé selon la revendication 4, **caractérisé en ce qu'**on effectue l'étape de pré refroidissement jusqu'à atteindre une température de l'atmosphère ambiante extérieure aux emballages de 80°C.

6. Procédé selon l'une des revendications 1 à 5, **caractérisé en ce qu'**on récupère l'eau s'écoulant en sortie desdites canalisations formant radiateurs (2a, 2b, 2c), de préférence au fond (1-1) dudit autoclave, et pour ladite étape de refroidissement, on fait recirculer l'eau ainsi récupérée, de préférence en l'envoyant dans la partie supérieure (21) dudit autoclave, pour l'injecter ou la pulvériser par-dessus lesdits emballages.

7. Procédé selon l'une des revendications 1 à 6, **caractérisé en ce qu'**à l'étape de prérefroidissement, on récupère le condensat au fond (1₁) de l'autoclave (1).

8. Procédé selon l'une des revendications 6 ou 7, **caractérisé en ce qu'**on fait recirculer l'eau provenant des condensats de la vapeur récupérée au fond de l'autoclave en mélange avec l'eau s'écoulant en sortie desdites canalisations formant radiateurs (2a, 2b, 2c).

9. Procédé selon la revendication 8, **caractérisé en ce que** pendant ladite étape de pré refroidissement, on effectue une ventilation forcée d'air (8) à l'intérieur dudit autoclave, et de préférence, on maintient la pression par injection d'air comprimé, au même niveau que celui atteint à l'étape de chauffage.

10. Procédé selon l'une des revendications 1 à 9 **caractérisé en ce qu'**on règle la température de pré refroidissement par réglage du débit d'alimentation en eau desdites canalisations formant radiateurs (2a, 2b, 2c).

11. Dispositif de traitement thermique de produit(s) sous emballage(s) utile dans un procédé selon l'une des revendications 1 à 10, comprenant :
- un dit autoclave (1) apte au traitement thermique de produit sous emballage,
- un canal de ventilation à l'intérieur duquel peuvent être placés lesdits emballages,
- des moyens d'injection de vapeur dans ledit autoclave,
- des moyens de ventilation dans ledit canal de ventilation, et
- des moyens de pulvérisation d'eau froide sur lesdits emballages,
**caractérisé en ce que** ledit autoclave (1) comprend des moyens d'abaissement de la température à l'extérieur desdits emballages et assèchement desdits emballages par circulation d'eau froide à l'intérieur de canalisations formant des radiateurs (2a, 2b, 2c) à proximité de l'emplacement destiné à recevoir lesdits emballages, lesdits radiateurs formant un dit canal de ventilation tel que défini dans l'une des revendications 1, 2 et 6 à 10.

## Claims

1. A method of applying heat treatment to hermetically-packaged substances, in particular foodstuffs, for sterilization or debacterization purposes, the method comprising the following steps:
· a heating step of heating by injecting steam into the autoclave and causing the steam to flow between said packages placed inside a ventilation channel;
· a pre-cooling step of pre-cooling without putting water directly into contact with said packages; and
· a cooling step of cooling by injecting or spraying water directly into contact with said packages;
the method being **characterized in that**:
· substances are processed in packages comprising paper or card; and
· during the pre-cooling step, the temperature of the ambient atmosphere outside the packages is reduced, and said packages are dried, by causing cold water to flow inside radiator-forming pipes (2a, 2b, 2c) passing close to said packages inside said autoclave (1), said radiators forming a said ventilation channel.

2. A method according to claim 1, **characterized in that** said radiator-forming pipes (2) are in the form of rectangular plates (2a) interconnected by tubular ducts (2b), said rectangular plates (2a) comprising plates located laterally relative to said packages and in the longitudinal direction of the autoclave.

3. A method according to claim 1 or claim 2, **characterized in that** substances are heated in packaging having mechanical properties that are affected by moisture when said packages are raised to a given temperature, and said pre-cooling step is performed to lower the temperature to reach a package temperature that is lower than or equal to said given temperature.

4. A method according to claim 3, **characterized in that** said package is constituted by a multi-layer laminate of paper and card bonded together by polymer binders.

5. A method according to claim 4, **characterized in that** the pre-cooling step is performed to cause the ambient atmosphere outside the packages to reach a temperature of 80°C.

6. A method according to any one of claims 1 to 5, **characterized in that** the water flowing out from said radiator-forming pipes (2a, 2b, 2c) is recovered, preferably from the bottom (1-1) of said autoclave, and for said cooling step, the water recovered in this way is recirculated, preferably by being delivered to the top portion (21) of said autoclave, to be injected or sprayed above said packages.

7. A method according to any one of claims 1 to 6, **characterized in that** during the pre-cooling step, the condensate at the bottom (1₁) of the autoclave (1) is collected.

8. A method according to claim 6 or claim 7, **characterized in that** the water coming from the steam condensates recovered from the bottom of the autoclave is recycled in a mixture with the water flowing out from said radiator-forming pipes (2a, 2b, 2c).

9. A method according to claim 8, **characterized in that** during said pre-cooling step, forced air circulation (8) is established inside said autoclave, and preferably compressed air is injected to maintain the pressure at the same level as that which exists during the heating step.

10. A method according to any one of claims 1 to 9, **characterized in that** the pre-cooling temperature is adjusted by adjusting the rate at which water is fed to said radiator-forming pipes (2a, 2b, 2c).

11. A device for applying heat treatment to packaged substance(s) suitable for use in a method according to any one of claims 1 to 10, the device comprising:
· a said autoclave (1) suitable for applying heat treatment to the packaged substance;
· a ventilation channel within which said packages can be placed;
· means for injecting steam into said autoclave;
· fan means in said ventilation channel; and
· means for spraying cold water onto said packages;
the device being **characterized in that** said autoclave (1) includes means for lowering the temperature outside said packages and for drying said packages by causing cold water to flow inside radiator-forming pipes (2a, 2b, 2c) close to the location that is to receive said packages, said radiators forming a said ventilation channel as defined in any one of claims 1, 2, and 6 to 10.

## Patentansprüche

1. Verfahren zur Wärmebehandlung von/eines Produkten/s in hermetisch dichter/n Verpackung/en, insbesondere von/eines Nahrungsmitteln/s zu ihrer/seiner Sterilisierung oder Entbakterisierung, bei dem nacheinander folgende Schritte durchgeführt werden:
- ein Schritt der Erhitzung durch Dampfeinspritzung in den Autoklaven und Ventilation des Dampfes zwischen den Verpackungen, die im Inneren eines Ventilationskanals angeordnet sind,
- ein Schritt der Vorkühlung ohne direkte Kontaktnahme von Wasser mit den Verpackungen, und
- ein Schritt der Kühlung durch Einspritzen oder Zerstäuben von Wasser in direkten Kontakt mit den Verpackungen,
**dadurch gekennzeichnet, daß:**
- Produkte in Verpackungen, die Papier oder Karton umfassen, behandelt werden, und
- beim Schritt der Vorkühlung eine Absenkung der Temperatur der Raumluft außerhalb der Verpackungen und ein Trocknen der Verpackungen durch Zirkulation von kaltem Wasser im Inneren von Kanälen, die Radiatoren (2a, 2b, 2c) bilden, die in der Nähe der Verpackungen im Inneren des Autoklaven (1) verlaufen, vorgenommen werden, wobei die Radiatoren einen so genannten Ventilationskanal bilden.

2. Verfahren nach Anspruch 1, **dadurch gekennzeichnet, daß** die Kanäle, die Radiatoren (2) bilden, in Form von rechteckigen Platten (2a) vorhanden sind, die miteinander durch Rohrleitungen (2b) verbunden sind, wobei die rechteckigen Platten (2a) seitlich an den Verpackungen und in Längsrichtung des Autoklaven angeordnete Platten umfassen.

3. Verfahren nach Anspruch 1 oder 2, **dadurch gekennzeichnet, daß** Produkte in Verpackung behandelt werden, deren mechanische Eigenschaften durch die Feuchtigkeit beeinträchtigt werden, wenn die Verpackungen auf eine gegebene Temperatur gebracht werden, und daß der Schritt der Vorkühlung durchgeführt wird, um die Temperatur abzusenken, bis eine Temperatur der Verpackung kleiner oder gleich der gegebenen Temperatur erreicht wird.

4. Verfahren nach Anspruch 3, **dadurch gekennzeichnet, daß** die Verpackung von einem mehrschichtigen Komplex aus mittels Polymerbindemittel zusammengeklebtem Papier und Karton gebildet ist.

5. Verfahren nach Anspruch 4, **dadurch gekennzeichnet, daß** der Schritt der Vorkühlung durchgeführt wird, bis eine Temperatur der Raumluft außerhalb der Verpackungen von 80 °C erreicht ist.

6. Verfahren nach einem der Ansprüche 1 bis 5, **dadurch gekennzeichnet daß** das am Ausgang der Radiatoren (2a, 2b, 2c) bildenden Kanäle abfließende Wasser vorzugsweise am Boden (1-1) des Autoklaven wiedergewonnen wird, und daß für den Schritt des Kühlens das so wiedergewonnene Wasser wieder zum Zirkulieren gebracht wird, wobei es vorzugsweise in den oberen Teil (21) des Autoklaven geschickt wird, um es über den Verpackungen einzuspritzen oder zu zerstäuben.

7. Verfahren nach einem der Ansprüche 1 bis 6, **dadurch gekennzeichnet, daß** beim Schritt der Vorkühlung das Kondensat am Boden (1₁) des Autoklaven (1) wiedergewonnen wird.

8. Verfahren nach einem der Ansprüche 6 oder 7, **dadurch gekennzeichnet, daß** das von den Kondensaten des am Boden des Autoklaven wiedergewonnenen Dampfes kommende Wasser im Gemisch mit dem am Ausgang der Radiatoren (2a, 2b, 2c) bildenden Kanäle abfließenden Wasser wieder zum Zirkulieren gebracht wird.

9. Verfahren nach Anspruch 8, **dadurch gekennzeichnet, daß** beim Schritt des Vorkühlens eine Fremdlüftung (8) im Inneren des Autoklaven vorgenommen und vorzugsweise der Druck durch Einleiten von Druckluft auf demselben Niveau wie dem beim Schritt des Erhitzens erreichten gehalten wird.

10. Verfahren nach einem der Ansprüche 1 bis 9, **dadurch gekennzeichnet, daß** die Temperatur der Vorkühlung durch Regelung der Wasserzuleitungsmenge in die Radiatoren (2a, 2b, 2c) bildenden Kanäle geregelt wird.

11. Vorrichtung zur Wärmebehandlung von/eines Produkten/s in Nutzverpackung/en in einem Verfahren nach einem der Ansprüche 1 bis 10, umfassend:
- einen Autoklav (1), der für die Wärmebehandlung eines Produktes in Verpackung geeignet ist,
- einen Ventilationskanal, in dem die Verpackungen angeordnet werden können,
- Mittel zum Einleiten von Dampf in den Autoklaven,
- Ventilationsmittel im Ventilationskanal, und
- Mittel zur Zerstäubung von kaltem Wasser auf die Verpackungen,
**dadurch gekennzeichnet, daß** der Autoklav (1) Mittel zum Absenken der Temperatur außerhalb der Verpackungen und zum Trocknen der Verpackungen durch Zirkulation von kaltem Wasser im Inneren der Radiatoren (2a, 2b, 2c) bildenden Kanäle in der Nähe der Stelle, die dazu bestimmt ist, die Verpackungen aufzunehmen, umfaßt, wobei die Radiatoren einen Ventilationskanal, wie in einem der Ansprüche 1, 2 und 6 bis 10 definiert, bilden.
